(19) Europäisches Patentamt
European Patent Office
Office européen des brevets

(11) **EP 1 442 952 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(51) Int Cl.:
**B60T 8/00** *(2006.01)* **B60T 8/18** *(2006.01)*
**B60T 8/24** *(2006.01)* **B60T 7/12** *(2006.01)*

(21) Anmeldenummer: **04000112.5**

(22) Anmeldetag: **07.01.2004**

(54) **VERFAHREN ZUR STEUERUNG EINER ROLLSPERRE FÜR EIN FAHRZEUG**

METHOD OF PREVENTING THE ROLLING DOWN OF A VEHICLE

PROCÉDÉ POUR MAINTENIR UN VÉHICULE IMMOBILE SUR UNE VOIE EN PENTE

(84) Benannte Vertragsstaaten:
**DE IT NL SE**

(30) Priorität: **30.01.2003 DE 10303590**

(43) Veröffentlichungstag der Anmeldung:
**04.08.2004 Patentblatt 2004/32**

(73) Patentinhaber: **WABCO GmbH**
**30453 Hannover (DE)**

(72) Erfinder:
• **Henken, Immanuel**
**31867 Lauenau (DE)**
• **Schlottmann, Marcel**
**30453 Hannover (DE)**
• **Struwe, Otmar**
**30163 Hannover (DE)**
• **Wolff, Hans-Klaus**
**31832 Springe (DE)**

(74) Vertreter: **Schrödter, Manfred et al**
**WABCO GmbH**
**Postfach 91 12 62**
**30432 Hannover (DE)**

(56) Entgegenhaltungen:
**EP-A- 0 374 484 DE-U- 20 021 110**
**US-B1- 6 422 663**

• **PATENT ABSTRACTS OF JAPAN vol. 008, no. 276 (M-346), 18. Dezember 1984 (1984-12-18) & JP 59 145659 A (MAZDA KK), 21. August 1984 (1984-08-21)**

**Beschreibung**

Die Erfindung bezieht sich auf ein Verfahren für die Steuerung einer Rollsperre für ein Fahrzeug gemäß dem Oberbegriff des Patentanspruchs 1.

Derartige Rollsperren dienen dazu, das Fahrzeug durch seine Betriebs-Bremsanlage im Stillstand auch ohne Fahrer-Betätigung des Bremspedals durch automatisches Einsteuern eines Rollsperrendruckes in die Radbremsen auf einer Fahrbahn, die beispielsweise auch geneigt sein kann, zu halten.

Die Rollsperren sind hauptsächlich in Fahrzeugen (insbesondere Nutzfahrzeugen) eingesetzt, die mit einer fremdkraftgespeisten Bremsanlage und mit einer elektronischen Bremssteuerung (EBS) ausgerüstet sind. Als Fremdkraft kommen dabei Druckluft, Hydraulik, oder aber elektrische Energiespeicherung (Batterien) in Betracht.

Bei einer EBS erfolgt die Signalübertragung vom Bremspedal zur Bremse nicht mechanisch, sondern elektronisch. Hierzu ist ein geeignetes Steuergerät (Elektronik) notwendig. Dieses steuert gemäß der Bremsanforderung des Fahrers durch Ansteuerung von vorgeschalteten Magnetventilen oder durch elektrische Ansteuerung von elektromechanischen Betätigungsgliedern, z.B. Stellmotoren, die eigentlichen Bremsen an. Die Bremsdrücke werden dabei eingeregelt, d.h. mit Drucksensoren gemessen und bei Abweichung des Ist-Druckes vom Soll-Druck korrigiert. Hierdurch kann ein komfortables, PKW- ähnliches Bremsverhalten erzielt werden.

Eine Halte- bzw. Park-Bremse in einem Fahrzeug mit einem elektronischen Bremssystem (EBS) ist z. B. aus der WO 99/48738 bekannt. Bei der bekannten Park-Bremse wird beansprucht, daß die Bremsung zusätzlich durch mechanische Mittel verriegelbar ist, so daß auch bei Abfall der Hilfskraft, beispielsweise Druckabfall der Druckluft, die Bremswirkung erhalten bleibt. Weiter zeigt die bekannte Schrift, daß die EBS an einen CAN-Datenbus angeschlossen ist, wodurch der EBS-Elektronik weitere Fahrzeugdaten von anderen Elektroniken oder Sensoren im Fahrzeug, beispielsweise Bremsdrücke, Radgeschwindigkeiten, Motordaten, Reifendrücke, Fahrzeuggewicht, Straßenbeschaffenheit (Reibwerte), Sraßenneigung usw. zur Verfügung stehen können.

Diese Daten können wie erwähnt entweder durch besondere Sensoren gemessen werden, oder aber, was kostengünstiger ist, aus anderen Fahrzeugdaten berechnet werden. So kann z.B. das Fahrzeuggewicht aus der Fahrzeugbeschleunigung gemäß der DE 3246201 A1 und die Straßenneigung gemäß der DE 3334719 A1 bestimmt werden.

Weiter ist aus der EP 0 822 129 B1 ein Verfahren zum Anfahren eines Fahrzeugs bekannt, bei dem der erforderliche Bremsdruck zum Bremsen und Halten des Fahrzeugs mittels Fremdkraft oder Fremdkraftmitteln aufgebaut wird, wenn die vom Fahrzeug-Bediener ausgeübte Bremskraft nicht ausreicht, um das Fahrzeug zu halten. Als Haltedruck bzw. Referenzwert des Bremsdruckes im Haltezeitpunkt wird bei dem bekannten Verfahren der Bremsdruck eingesteuert, der zu diesem Zeitpunkt durch den Fahrer gerade vorgegeben worden ist.

Dieses Verfahren hat den Nachteil, daß insbesondere bei einem Halt auf ansteigender Straße der eingesteuerte Bremsdruck unter Umständen nicht ausreichend sein kann, um das Fahrzeug anschließend sicher zu halten. Der Grund hierfür ist, das auf ansteigender Straße weniger gebremst werden muß, um das Fahrzeug zum Stehen zu bringen. Entsprechend kann bei einer Bremsung im Gefälle der Haltedruck zu hoch ausfallen, wodurch sich eine unnötige Belastung der Bremsanlage und ein zu hoher Luftverbrauch ergibt. Aus der genannten Schrift ist weiter bekannt, daß zur Ermittlung des Referenzwertes auch der Neigungswinkel des Fahrzeugs berücksichtigt wird, und daß weitere fahrzeugspezifische Parameter berücksichtigt werden können.

Schließlich ist aus der DE 196 25 989 A1 ein Verfahren zum Betreiben einer Bremsanlage, insbesondere einer fremdkraftgespeisten Bremsanlage von Nutzfahrzeugen, bekannt, bei dem ebenfalls bei Stillstand des Fahrzeuges ein Bremsdruck unabhängig von der Betätigung des Bremspedales aufrechterhalten wird. Aufgabe ist hier, den Druckmittelverbrauch zu verringern. Hierzu können einzelnen Fahrzeugachsen unterschiedliche Haltedrücke zugeführt werden. Dabei wird grundsätzlich der zum Halten des Fahrzeugs einzusteuernde Bremsdruck anhand eines Maßes für die Bremsbetätigung des zum Stillstand führenden Bremsvorganges ermittelt. Dieses Verfahren hat ebenfalls den Nachteil, daß der damit ermittelte Haltedruck bei einer Bremsung in einer Steigung zu gering und in einem Gefälle zu hoch ausfallen kann.

Dokument US 6 422 663 B1 offenbart ein Verfahren gemäß dem Oberbegriff des Anspruchs 1.

Der Erfindung liegt die Aufgabe zugrunde, den Haltedruck für eine Rollsperre so zu berechnen und im richtigen Moment in die Bremsen einzuleiten, daß bei jeder Straßensteigung stets ein für das sichere Halten des Fahrzeugs genügend hoher, aber andererseits nicht zu hoher Haltedruck berechnet und eingesteuert wird. Hierdurch soll die Rollsperre für den Fahrer komfortabel und zuverlässig bedienbar sein, ohne zu einem unnötig hohen Druckmittelverbrauch der fremdkraftgespeisten Bremsanlage zu führen.

Diese Aufgabe wird durch die im Patentanspruch 1 enthaltene Erfindung gelöst.

Die Unteransprüche enthalten zweckmäßige Weiterbildungen der Erfindung.

Erfindungsgemäß ist der von der Elektronik berechnete und anschließend in die Radbremsen ausgesteuerte Rollsperrendruck eine Funktion der Fahrbahnneigung und mindestens einer aus dem Gewicht des Fahrzeugs abgeleiteten Größe.

Dabei ist es erfindungsgemäß zweckmäßig, den Rollsperrendruck als Produkt aus dem Betrag der Fahrbahnneigung und dem Gewicht des Fahrzeugs zu berechnen. Die Werte von Fahrbahnneigung und Gewicht können dabei wie im obengenannten Stand der Technik angeführt, ermittelt werden.

Besonders zweckmäßig ist es erfindungsgemäß, den Rollsperrendruck fahrzeugintern zu berechnen nach der Formel

$$\texttt{RSP\_Druck = RSP\_Neigung x U\_F}$$

wobei

RSP_Druck = Rollsperrendruck
RSP_Neigung = verifizierte Fahrzeug-Neigung
U_F = Funktion des Fahrzeug-Bremsdruckniveaus aus früheren Bremsungen.

Als RSP_Neigung bzw. verifizierte Fahrzeug-Neigung wird hierbei ein Wert der Fahrzeugneigung bezeichnet, der vor der Verwendung in der obengenannten Formel noch verifiziert, d. h. auf Plausibilität geprüft worden ist. Dies geschieht durch eine entsprechende Programmierung bzw. Logik der Rollsperren-Elektronik.

Das verwendete Fahrzeug-Bremsdruckniveau (Mittelwert) aus früheren Bremsungen beinhaltet die Gewichtsinformation des Fahrzeuges, da zum Abbremsen eines Fahrzeuges mit höherem Gewicht auch ein höheres Bremsdruckniveau erforderlich ist. Da bei Fahrzeugen mit EBS die Bremsdrücke eingeregelt werden und deshalb mit Drucksensoren erfaßt werden, ist das jeweilige Fahrzeug-Bremsdruckniveau leicht meßbar und in entsprechenden Speicherbereichen abspeicherbar.

Die Erfassung bzw. Schätzung des Fahrzeuggewichtes aus dem Bremsdruckniveau früherer Bremsungen hat allerdings den Nachteil, daß der hiermit bestimmte Faktor bei einer längeren Bergabfahrt zu hoch ausfallen würde, da sich bei Bergab-Bremsungen natürlich ein höheres Bremsdruckniveau ausbildet. Entsprechend fällt der Faktor bei einer längeren Bergauffahrt zu gering aus, da hier zur Abbremsung kleinere Bremsdrücke ausreichend sind.

Aus diesem Grund kann man in einer weiteren erfindungsgemäßen Ausführungsform den Rollsperrendruck zweckmäßig neben der vorgenannten Formel auch genauer berechnen nach der Formel

$$\texttt{RSP\_Druck = RSP\_Neigung x U\_F x Km ,}$$

wobei
Km = Faktor zur Berücksichtigung des aktuellen Gewichts bzw. Beladungszustandes des Fahrzeugs.

Hierdurch wird das tatsächliche Gewicht des Fahrzeugs in die Formel eingeführt. Damit läßt sich der optimale Rollsperrendruck noch genauer berechnen.

Der Wert des derart berechneten Rollsperrendruckes wird dann in einen temporären Speicher eingelesen und bei Bedarf ausgesteuert. Dies hat den Vorteil, daß ein Druckwert auch dann vorhanden ist, wenn eine Neuberechnung zeitweilig, beispielsweise durch zu sehr schwankende Fahrbahn-Bedingungen, nicht sinnvoll ist.

Weiter ist zweckmäßig, daß eine Überschreibung des Druckwertes im temporären Speicher nur dann zulässig ist, wenn die Fahrzeuggeschwindigkeit oberhalb einer Grenzgeschwindigkeit liegt. Diese Grenzgeschwindigkeit beträgt etwa 20 km/h.

Diese Bedingung ist insbesondere dann zweckmäßig, wenn sich das Fahrzeug im sogenannten stop-and-go-Betrieb befindet. In diesem Fall ist es nicht vorteilhaft, den Rollsperrendruck ständig neu zu berechnen, da die Bedingungen zu wechselhaft sind. Es wird statt dessen mit einem konstanten, festen Wert gearbeitet.

Weiter ist es zweckmäßig, daß für den Fall, daß fahrzeugintern noch keine Meßwerte für die Fahrbahnneigung, das Bremsdruckniveau oder den Beladungszustand vorliegen, feste Schwellwerte für diese drei Werte eingestellt werden. Hierzu werden mittlere Werte verwendet, beispielsweise 5 % für die Fahrbahnneigung, 1 bar für das Bremsdruckniveau und das Fahrzeuggewicht bei halber Beladung für das Fahrzeuggewicht.

Es ist auch möglich, daß für die Einzelachsen des Fahrzeugs unterschiedliche Haltedrücke berechnet und ausgesteuert werden. Dies geschieht in Abhängigkeit von den Lastanteilen der Einzelachsen, die wie oben aus den einzelnen Bremsdruckniveaus der Einzelachsen bestimmt werden können. Dabei werden zweckmäßig die Achsen mit den höheren Lastanteilen mit höheren Haltedrücken versorgt.

In der (einzigen) Figur ist ein Flußdiagramm für die Rollsperren-Elektronik zur Berechnung des Rollsperrendruckes und die Aktivierung der Rollsperre, d. h. das Einsteuern des berechneten Druckes in die Radbremsen, dargestellt.

Das Flußdiagramm beginnt mit einem Startschritt, in welchem eine Initialisierung des Programmes durchgeführt wird. Dies bedeutet, daß den verschiedenen Variablen des Programmes, die zu diesem Zeitpunkt noch keine bestimmten Werte haben, feste Anfangswerte zugewiesen werden. Dabei wird die Grenzgeschwindigkeit v_grenz beispielsweise auf 20 km/h eingestellt, der Schwellwert der Rollsperrenneigung beispielsweise auf 5 % eingestellt, der Schwellwert des Rollsperrendruckes beispielsweise auf 1 bar eingestellt und der Rollsperrendruck auf 0 bar gesetzt.

Im nächsten Schritt werden verschiedene Anfangswerte in die Rollsperrenelektronik eingelesen.

So wird zunächst geprüft und eingelesen, ob die Rollsperren-Anforderung, also beispielsweise ein vom Fahrer zu betätigender Schalter, gesetzt ist oder nicht. Weiter werden die Radgeschwindigkeiten des Fahrzeugs, welche ständig durch die Drehzahlsensoren des im EBS integrierten Antiblockiersystems (ABS) abgetastet werden, ebenfalls eingelesen. Hieraus wird die Fahrzeuggeschwindigkeit berechnet. Weiter wird geprüft, ob die Betriebsbremsanlage (BBA_info) und die Feststellbremsanlage (FBA_info) betätigt sind oder nicht. Weiter werden die Fahrzeugmasse, die Fahrzeugneigung bzw Fahrbahnneigung, das Fahrzeugbremsdruckniveau und die Druckverteilung des Bremsdruckes an den einzelnen Achsen eingelesen. Hierzu werden zunächst informelle, d.h. geschätzte, Werte verwendet.

Als nächster Schritt wird abgefragt, ob die Rollsperrenanforderung, beispielsweise durch Betätigung eines Fahrerschalters, gesetzt ist. Falls dies nicht der Fall ist, wird in einer Schleife zum Schritt "Einlesen" zurückgeleitet.

Falls die Anforderung jedoch gesetzt ist, wird geprüft, ob die Feststellbremsanlage (FBA) betätigt ist. Falls hierzu die Information ungleich Null ist, d. h. die Feststellbremsanlage betätigt ist, wird wiederum zurückgeleitet.

Falls die Information jedoch gleich Null ist, d. h. die Feststellbremsanlage nicht betätigt ist, wird zum nächsten Schritt weitergeleitet, wo geprüft wird, ob die Betriebsbremsanlage (BBA) betätigt wird. Falls diese nicht betätigt ist, der Fahrer also nicht bremst, wird wiederum zurückgeleitet.

Falls der Fahrer jedoch gerade bremst (BBA_info=1), wird im nächsten Schritt geprüft, ob die Fahrzeuggeschwindigkeit oberhalb der Grenzgeschwindigkeit liegt. Dies muß z. B. für 60 Sekunden erfüllt sein.

Falls dies nicht der Fall ist, wird im Programm nach unten gesprungen und direkt geprüft, ob der vorliegende bzw. berechnete Rollsperrendruck größer ist als die vorgegebene Rollsperren-Druckschwelle von etwa 1 bar.

Falls dies nicht der Fall ist, wird der Rollsperrendruck gleich der Druckschwelle gesetzt. Als nächstes wird geprüft, ob ein Stillstand des Fahrzeugs erkannt wurde. Dies läßt sich aus der Fahrzeugverzögerung erkennen.

Falls dies nicht der Fall ist, wird zum Schritt "Einlesen" zurückgeleitet. Falls dies jedoch der Fall ist, wird der in der Rollsperrenelektronik berechnete Rollsperrendruck auf die Radbremsen geleitet und so die Rollsperre aktiviert.

Nach der bereits oben erwähnten Abfrage, ob die Fahrzeuggeschwindigkeit über der Grenzgeschwindigkeit liegt, wird für den Fall, daß dies bejaht wird, im nächsten Schritt geprüft, ob die voreingestellte Fahrzeugneigung gültig, d.h. plausibel, ist. Dies erfolgt durch weitere Prüfungen.

Falls dies der Fall ist, wird die Rollsperrenneigung, d. h. der in der Rollsperre vorliegende Wert für die Straßenneigung, gleich der Fahrzeugneigung gesetzt.

Falls dies nicht der Fall ist, wird die Rollsperrenneigung auf den obengenannten Schwellwert, beispielsweise 5 %, eingestellt.

Im nächsten Schritt wird geprüft, ob die Fahrzeugdaten, insbesondere der Wert U_F für das Fahrzeug-Bremsdruckniveau aus früheren Bremsungen, gültig sind.

Falls die Fahrzeugdaten nicht gültig sind, wird der Rollsperrendruck als Rollsperrenneigung mal Funktion des Fahrzeugbremsdruckniveaus mal Faktor zur Berücksichtigung des Fahrzeug-Gewichtes berechnet. Hierbei wird für den letztgenannten Faktor jedoch ein vorgegebener Wert U_F_min eingesetzt, d. h. ein minimales Fahrzeugbremsdruckniveau aus früheren Bremsungen.

Falls die Fahrzeugdaten jedoch gültig waren, wird der Rollsperrendruck (RSP_Druck) berechnet aus RollsperrenNeigung mal Fahrzeug-Bremsdruckniveau aus früheren Bremsungen (U_F) mal Faktor (Km) zur Berücksichtigung des aktuellen Fahrzeug-Gewichtes. Dabei kann der Wert für U_F zusätzlich von der Fahrzeugdruckverteilung abhängig gemacht werden.

Im nächsten Schritt wird, wie oben bereits beschrieben, geprüft, ob der Rollsperrendruck größer als die oben erwähnte Rollsperrendruckschwelle ist und falls dies der Fall ist, wie ebenfalls oben bereits beschrieben, bei erkanntem Stillstand des Fahrzeuges die Rollsperre anschliessend aktiviert, d. h. der elektronikintern berechnete Rollsperrendruck auf die Radbremsen geleitet.

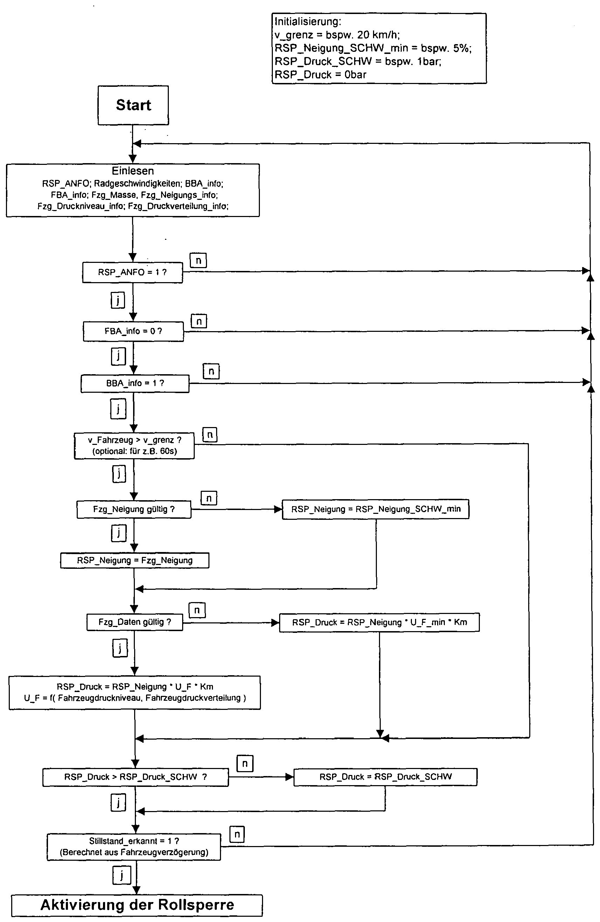

## Patentansprüche

1. Verfahren für die Steuerung einer Rollsperre (RSP) für ein Fahrzeug, insbesondere Nutzfahrzeug, mit fremdkraftgespeister Bremsanlage und mit elektronischer Bremssteuerung (EBS), wobei das Fahrzeug durch seine Betriebs-Bremsanlage im Stillstand auch ohne Fahrer-Betätigung des Bremspedals durch automatisches Einsteuern eines Rollsperrendruckes in die Radbremsen auf einer ebenen oder geneigten Fahrbahn gehalten werden kann, wobei der Rollsperrendruck eine Funktion der Fahrbahnneigung und mindestens einer aus dem Gewicht des Fahrzeugs abgeleiteten Größe ist und der Rollsperrendruck proportional dem Produkt aus dem Betrag der Fahrbahnneigung und dem Gewicht des Fahrzeugs ist, **dadurch gekennzeichnet, daß** der Rollsperrendruck fahrzeugintern berechnet wird nach der Formel

$$RSP\_Druck = RSP\_Neigung \times U\_F \; ,$$

wobei

RSP_Druck = Rollsperrendruck
RSP_Neigung = verifizierte Fahrzeug-Neigung
U_F = Funktion des Fahrzeug-Bremsdruckniveaus aus früheren Bremsungen.

2. Verfahren für die Steuerung einer Rollsperre (RSP) für ein Fahrzeug, insbesondere Nutzfahrzeug, mit fremdkraftgespeister Bremsanlage und mit elektronischer Bremssteuerung (EBS), wobei das Fahrzeug durch seine Betriebs-Bremsanlage im Stillstand auch ohne Fahrer-Betätigung des Bremspedals durch automatisches Einsteuern eines Rollsperrendruckes in die Radbremsen auf einer ebenen oder geneigten Fahrbahn gehalten werden kann, wobei der Rollsperrendruck eine Funktion der Fahrbahnneigung und mindestens einer aus dem Gewicht des Fahrzeugs abgeleiteten Größe ist und der Rollsperrendruck proportional dem Produkt aus dem Betrag der Fahrbahnneigung und dem Gewicht des Fahrzeugs ist, **dadurch gekennzeichnet, daß** der Rollsperrendruck fahrzeugintern berechnet wird nach der Formel

$$RSP\_Druck = RSP\_Neigung \times U\_F \times Km,$$

wobei

RSP_Druck = Rollsperrendruck
RSP_Neigung = verifizierte Fahrzeug-Neigung
U_F = Funktion des Fahrzeug-Bremsdruckniveaus aus früheren Bremsungen
Km = Faktor zur Berücksichtigung des aktuellen Gewichts des Fahrzeugs.

3. Verfahren nach einem der Ansprüche 1 oder 2, **dadurch gekennzeichnet, daß** der Wert des berechneten Rollsperrendruckes in einen temporären Speicher eingelesen wird.

4. Verfahren nach Anspruch 3, **dadurch gekennzeichnet, daß** eine Überschreibung des Druckwertes im temporären Speicher nur dann zulässig ist, wenn die Fahrzeuggeschwindigkeit oberhalb einer Grenzgeschwindigkeit liegt.

5. Verfahren nach Anspruch 4, **dadurch gekennzeichnet, daß** die Grenzgeschwindigkeit etwa 20 km/h beträgt.

6. Verfahren nach einem oder mehreren der Ansprüche 1 bis 5, **dadurch gekennzeichnet, daß** für den Fall, daß fahrzeugintern noch keine Meßwerte für die Fahrbahnneigung, das Bremsdruckniveau oder den Beladungszustand vorliegen, feste Schwellwerte verwendet werden.

7. Verfahren nach einem oder mehreren der Ansprüche 1 bis 6, **dadurch gekennzeichnet, daß** für die Einzelachsen des Fahrzeugs unterschiedliche Haltedrücke berechnet und ausgesteuert werden, in Abhängigkeit von den Lastanteilen der Einzelachsen.

8. Verfahren nach Anspruch 7, **dadurch gekennzeichnet, daß** Achsen mit höheren Lastanteilen mit höheren Haltedrücken versorgt werden.

**Claims**

1. Method for controlling a hill-start assist (RSP) for a vehicle, in particular a commercial vehicle, having a power-assisted brake system and having electronic brake control (EBS), wherein the vehicle can be kept at a standstill on a flat or inclined road by its service brake system, even without driver operation of the brake pedal, by automatically introducing a hill-start assist pressure into the wheel brakes, wherein the hill-start assist pressure is a function of the road inclination and at least one variable derived from the weight of the vehicle, and the hill-start assist pressure is proportional to the product of the absolute value of the road inclination and the weight of the vehicle, **characterized in that** the hill-start assist pressure is calculated internally in the vehicle using the formula

$$RSP\_pressure = RSP\_inclination \times U\_F,$$

where

RSP_pressure = hill-start assist pressure
RSP_inclination = verified vehicle inclination
U_F = function of the vehicle braking pressure level from earlier braking operations.

2. Method for controlling a hill-start assist (RSP) for a vehicle, in particular a commercial vehicle, having a power-assisted brake system and having electronic brake control (EBS), wherein the vehicle can be kept at a standstill on a flat or inclined road by its service brake system, even without driver operation of the brake pedal, by automatically introducing a hill-start assist pressure into the wheel brakes, wherein the hill-start assist pressure is a function of the road inclination and at least one variable derived from the weight of the vehicle, and the hill-start assist pressure is proportional to the product of the absolute value of the road inclination and the weight of the vehicle, **characterized in that** the hill-start assist pressure is calculated internally in the vehicle using the formula

$$RSP\_pressure = RSP\_inclination \times U\_F \times Km,$$

where

RSP_pressure = hill-start assist pressure
RSP_inclination = verified vehicle inclination
U_F = function of the vehicle braking pressure level from earlier braking operations
Km = factor to take into consideration the current weight of the vehicle.

3. Method according to either of Claims 1 and 2, **characterized in that** the value of the calculated hill-start assist pressure is read into a temporary memory.

4. Method according to Claim 3, **characterized in that** overwriting of the pressure value in the temporary memory is permissible only if the vehicle velocity is above a limit velocity.

5. Method according to Claim 4, **characterized in that** the limit velocity is approximately 20 km/h.

6. Method according to one or more of Claims 1 to 5, **characterized in that** if measured values for the road inclination, the braking pressure level or the loaded condition are not yet available internally in the vehicle, fixed threshold values are used.

7. Method according to one or more of Claims 1 to 6, **characterized in that** different holding pressures are calculated and modulated for the individual axles of the vehicle, on the basis of the load proportions of the individual axles.

8. Method according to Claim 7, **characterized in that** axles having higher load proportions are supplied with higher holding pressures.

**Revendications**

1. Procédé de commande d'un système anti-recul (RSP) pour un véhicule, notamment un véhicule utilitaire, comprenant un système de freinage actionné par une force extérieure et comprenant une commande de frein électronique (EBS), le véhicule pouvant être maintenu immobilisé sur une chaussée horizontale ou inclinée par son système de freinage de service même sans actionnement par le conducteur de la pédale de frein par application régulée automatique d'une pression de système anti-recul dans les freins de roue, la pression de système anti-recul étant une fonction de l'inclinaison de la chaussée et d'au moins une grandeur dérivée du poids du véhicule et la pression de système anti-recul étant proportionnelle au produit de l'amplitude de l'inclinaison de la chaussée par le poids du véhicule, **caractérisé en ce que** la pression de système anti-recul est calculée en interne du véhicule d'après la formule

$$RSP\_Druck = RSP\_Neigung \times U\_F,$$

où

RSP_Druck = pression de système anti-recul
RSP_Neigung = inclinaison vérifiée du véhicule
U_F = fonction du niveau de pression de frein de véhicule issue des freinages antérieurs.

2. Procédé de commande d'un système anti-recul (RSP) pour un véhicule, notamment un véhicule utilitaire, comprenant un système de freinage actionné par une force extérieure et comprenant une commande de frein électronique (EBS), le véhicule pouvant être maintenu immobilisé sur une chaussée horizontale ou inclinée par son système de freinage de service même sans actionnement par le conducteur de la pédale de frein par application régulée automatique d'une pression de système anti-recul dans les freins de roue, la pression de système anti-recul étant une fonction de l'inclinaison de la chaussée et d'au moins une grandeur dérivée du poids du véhicule et la pression de système anti-recul étant proportionnelle au produit de l'amplitude de l'inclinaison de la chaussée par le poids du véhicule, **caractérisé en ce que** la pression de système anti-recul est calculée en interne du véhicule d'après la formule

$$RSP\_Druck = RSP\_Neigung \times U\_F \times Km,$$

où

RSP_Druck = pression de système anti-recul
RSP_Neigung = inclinaison vérifiée du véhicule
U_F = fonction du niveau de pression de frein de véhicule issue des freinages antérieurs
Km = facteur destiné à prendre en compte le poids actuel du véhicule.

3. Procédé selon l'une des revendications 1 et 2, **caractérisé en ce que** la valeur de la pression de système anti-recul calculée est chargée dans une mémoire temporaire.

4. Procédé selon la revendication 3, **caractérisé en ce qu'**un dépassement de la valeur de la pression dans la mémoire temporaire n'est autorisé que lorsque la vitesse du véhicule est supérieure à une vitesse limite.

5. Procédé selon la revendication 4, **caractérisé en ce que** la vitesse limite est égale à environ 20 km/h.

6. Procédé selon l'une ou plusieurs des revendications 1 à 5, **caractérisé en ce que** dans le cas où aucune des valeurs mesurées pour l'inclinaison de la chaussée, le niveau de pression de freinage ou l'état de chargement n'est encore présente en interne du véhicule, des valeurs de seuil fixes sont utilisées.

7. Procédé selon l'une ou plusieurs des revendications 1 à 6, **caractérisé en ce que** des pressions de maintien différentes sont calculées et commandées pour les essieux individuels du véhicule, en fonction des parts de charge des essieux individuels.

8. Procédé selon la revendication 7, **caractérisé en ce que** les essieux ayant des parts de charge plus élevées sont alimentés avec des pressions de maintien plus élevées.

Initialisierung:
v_grenz = bspw. 20 km/h;
RSP_Neigung_SCHW_min = bspw. 5%;
RSP_Druck_SCHW = bspw. 1bar;
RSP_Druck = 0bar

**Start**

Einlesen
RSP_ANFO; Radgeschwindigkeiten; BBA_info;
FBA_info; Fzg_Masse, Fzg_Neigungs_info;
Fzg_Druckniveau_info; Fzg_Druckverteilung_info;

RSP_ANFO = 1 ?   [n]

[j]

FBA_info = 0 ?   [n]

[j]

BBA_info = 1 ?   [n]

[j]

v_Fahrzeug > v_grenz ?   [n]
(optional: für z.B. 60s)

[j]

Fzg_Neigung gültig ?   [n] → RSP_Neigung = RSP_Neigung_SCHW_min

[j]

RSP_Neigung = Fzg_Neigung

Fzg_Daten gültig ?   [n] → RSP_Druck = RSP_Neigung * U_F_min * Km

[j]

RSP_Druck = RSP_Neigung * U_F * Km
U_F = f( Fahrzeugdruckniveau, Fahrzeugdruckverteilung )

RSP_Druck > RSP_Druck_SCHW ?   [n] → RSP_Druck = RSP_Druck_SCHW

[j]

Stillstand_erkannt = 1 ?   [n]
(Berechnet aus Fahrzeugverzögerung)

[j]

**Aktivierung der Rollsperre**

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9948738 A
- DE 3246201 A1
- DE 3334719 A1
- EP 0822129 B1
- DE 19625989 A1
- US 6422663 B1